# EUROPEAN PATENT SPECIFICATION

(11) **EP 3 858 705 B1**
(45) Date of publication and mention of the grant of the patent: **19.11.2025**
(21) Application number: 19866051.6
(22) Date of filing: 10.07.2019
(51) Int. Cl.: B61L 23/00, B60L 15/40, B61L 27/20, B60L 3/00, B61L 23/04

(54) **TRAIN CONTROL DEVICE AND TRAIN CONTROL SYSTEM**
ZUGSTEUERUNGSVORRICHTUNG UND ZUGSTEUERUNGSSYSTEM
DISPOSITIF DE COMMANDE DE TRAIN ET SYSTÈME DE COMMANDE DE TRAIN

(30) Priority: 26.09.2018 JP 2018181012
(43) Date of publication of application: 04.08.2021
(73) Proprietor: Hitachi, Ltd., Tokyo 100-8280 (JP)
(72) Inventor: HANGYO, Kensuke, Tokyo 100-8280 (JP); KOIKE, Jun, Tokyo 100-8280 (JP)
(74) Representative: MERH-IP Matias Erny Reichl Hoffmann Patentanwälte PartG mbB
(86) International application number: PCT/JP2019/027359
(87) International publication number: WO 2020/066223

(56) References cited:
- WO-A1-2018/104462
- DE-A1- 102015 219 690
- JP-A- 2015 027 229
- JP-A- H0 710 003
- JP-A- H0 710 003

## Description

### Technical Field

The present invention relates to a train control device and a train control system.

### Background Art

In order to safely operate trains, a train control device acquires a distance to an obstacle located ahead such as a preceding train using some means, and needs to create a travel permission point. In Patent Literature 1, an imaging device is provided at a front part of a train in the advancing direction, an image of a rear-end body of a preceding train running ahead is captured by the imaging device, a visual angle in which the rear-end body of the preceding train having a known size can be viewed is measured by analyzing the obtained image, and a distance to the rear-end position of the preceding train is calculated and obtained on the basis of the size of the visual angle. Furthermore, WO 2018/104462 A1 discloses an image analysis device capable to assist driving a rail vehicle, wherein the image analysis device is implemented as a virtual machine. Eventually, JP H07 10003 A discloses a hindrance detecting device for railroad vehicle capable to calculate the braking distance of the vehicle by determining the speed of the preceding train, wherein the area to be inspected can be determined by always inspecting the area beyond the braking distance.

### Citation List

### Patent Literature

[Patent Literature 1] Japanese Unexamined Patent Application Publication No. 2015-193296
[Patent Literature 2] WO 2018/104462 A1
[Patent Literature 3] JP H07 10003 A

### Summary of Invention

### Technical Problem

In the case where the method described in Patent Literature 1 is used, a distance to an obstacle is obtained by analyzing an image of the obstacle, and thus a large computation load is disadvantageously applied to the train control device. Patent Literature 2 describes an autonomous rail vehicle with an obstacle detection system. the detection of objects comprises: analysing images of the track, detecting an object on the track, measuring the number of pixels between rails at the position of the object and measuring the distance to the object taking into account the known width of the track and the number of pixels measured.

Patent Literature 3 describes a system to prevent collisions with objects. The system includes a camera for taking pictures of the front direction of a railway vehicle and a laser sensor for measuring the distance to an obstacle. Images from a database are compared with the pictures to check the existence of obstacles.

### Solution to Problem

The present invention is set out in the appended set of claims. Preferred embodiments of the present invention are described in the dependent claims. Advantageous Effects of Invention

According to the present invention, it is possible to reduce a computation load when a distance to an obstacle is calculated.

### Brief Description of Drawings.

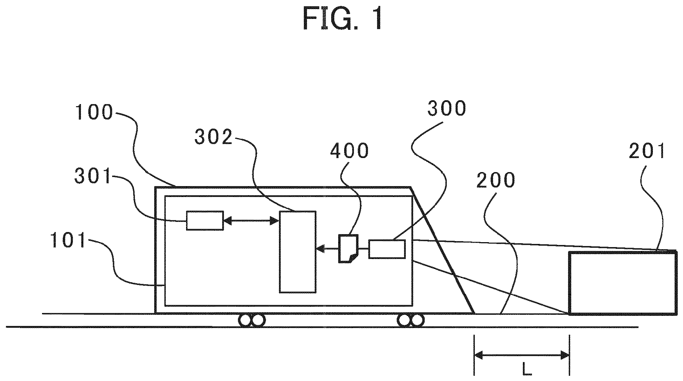

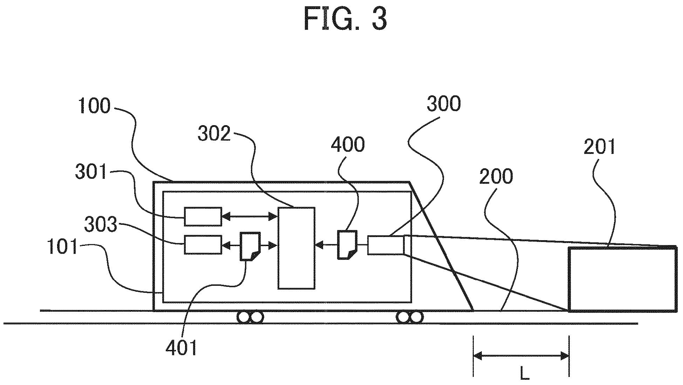

The examples in Figures 1 and 3 as described in the first and second embodiments, do not comprise all the features of Claim 1. Therefore, they do not form part of the claimed invention, but are shown for illustrative purposes only.

Fig. 1 is a diagram for showing a train in which a train control device in a first embodiment is mounted and an obstacle.
Fig. 2 is a diagram for showing an example of image data of the front.
Fig. 3 is a diagram for showing a train in which a train control device in a second embodiment is mounted and an obstacle.
Fig. 4 is a diagram for showing an example of relevant data in the second embodiment.
Fig. 5 is a diagram for showing a train in which a train control device in a third embodiment is mounted and an obstacle.
Fig. 6 is a diagram for showing an example of a database unit and relevant data in the third embodiment.
Fig. 7 is a diagram for showing a train control system in a fourth embodiment.

### Description of Embodiments

### First Embodiment

Fig. 1 is a diagram for showing a train 100 in which a train control device 101 is mounted and an obstacle 201. As shown in Fig. 1, the train 100 is on rails 200 that are travelling paths for the train 100, and the obstacle 201 such as a preceding train exists on the rails 200 ahead of the train 100.

The train control device 101 includes an imaging device 300, a travel permission point setting unit 301, and a rail image width recognition unit 302. In addition, image data 400 is transmitted from the imaging device 300 to the rail image width recognition unit 302.

The imaging device 300 captures a video in the front direction of the train during the travelling of the train 100, and transmits the video to the rail image width recognition unit 302 as the image data 400.

The rail image width recognition unit 302 recognizes the rails 200 and the obstacle 201 on the basis of the image data 400 of the front, and calculates the rail width of an obstacle point where the rails 200 intersect with the obstacle 201. Then, a distance L to the obstacle 201 is obtained on the basis of the calculated rail width, and is transmitted to the travel permission point setting unit 301.

The travel permission point setting unit 301 sets a travel permission point before the obstacle 201 on the basis of the distance L to the obstacle 201.

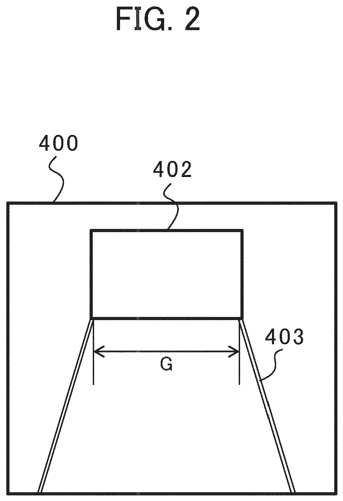

Fig. 2 is a diagram for showing an example of the image data 400. The image data 400 of the front contains various information, and the minimum information necessary for the embodiment will be described. As shown in Fig. 2, the image data 400 of the front captured by the imaging device 300 has a rail image 403 and an obstacle image 402. The rail image width recognition unit 302 calculates the rail width (rail image width) G of the obstacle point where the rail image 403 intersects with the obstacle image 402.

The interval between rails used for a railroad system is always constant in each route, and thus the rail width G on the image is characterized to be decreased in accordance with the distance L to the obstacle 201. Thus, the distance L to the obstacle 201 is computed on the basis of the rail image width G of the obstacle point that is the rail width on the image of the position of the intersection point where the rail image 403 intersects with the obstacle image 402. Here, a pixel of the image is used as a unit expressing the rail image width G of the obstacle point, but other measurement values may be used.

Next, a calculation of the distance L to the obstacle 201 will be described. The imaging device 300 captures a video in the front direction of the train 100 during the travelling of the train 100, and transmits the same to the rail image width recognition unit 302 as the image data 400. The rail image width recognition unit 302 calculates the rail image width G of the obstacle point on the basis of the image data 400 of the front. For example, the rail image width recognition unit 302 preliminarily defines an arithmetic expression representing a relation of the distance L to the obstacle 201 on the basis of the rail image width G of the obstacle point, and sequentially computes the distance L to the obstacle 201 during the travelling on the basis of the rail image width G of the obstacle point. The rail image width recognition unit 302 transmits the distance L to the obstacle 201 to the travel permission point setting unit 301, and the travel permission point setting unit 301 sets the travel permission point before the obstacle 201.

According to the embodiment, the distance L to the obstacle 201 is obtained on the basis of the rail image width G of the obstacle point, and thus a computation load when the distance to the obstacle located ahead is calculated can be reduced.

### Second Embodiment

Fig. 3 is a diagram for showing a train 100 in which a train control device 101 is mounted and an obstacle 201 in a second embodiment. Parts same as those in the first embodiment will be followed by the same signs, and the explanation thereof will be omitted. In the first embodiment, the distance L to the obstacle 201 is obtained using the arithmetic expression. However, relevant data relating the rail image width G of the obstacle point to the distance L to the obstacle 201 is used in the second embodiment.

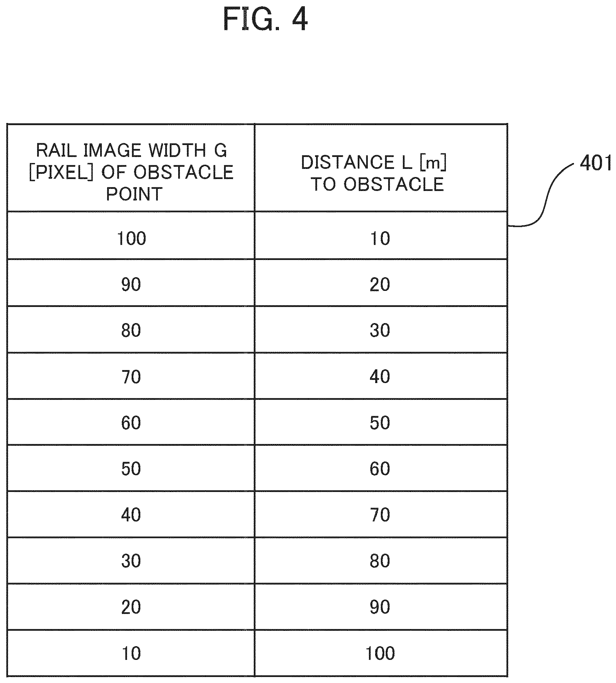

In the second embodiment, the train control device 101 has a database unit 303, and relevant data 401 relating the rail image width G of the obstacle point to the distance L to the obstacle 201 is stored in the database unit 303. As shown in Fig. 4, the relevant data 401 is data associating the distance L with the rail image width G. The rail image width recognition unit 302 recognizes the rail image width G, and then obtains the distance L to the obstacle 201 by referring to the relevant data 401. It should be noted that the relevant data 401 stored in the database unit 303 can be updated from a ground element installed near a track or ground facilities through wireless communications.

According to the embodiment, it is not necessary to sequentially compute the distance L to the obstacle 201 during the travelling on the basis of the rail image width G of the obstacle point, and the computation load of the rail image width recognition unit 302 can be reduced.

It should be noted that as a modified example of the second embodiment, the database unit 303 may store relevant data relating the rail image width G to the travel permission point set by the travel permission point setting unit 301. In this case, the train control device 101 sequentially calculates the rail image width G. When the obstacle 201 is recognized, the train control device 101 refers to the database unit 303 for the previous rail image width G. In the case where data of the matching rail image width G can be found as a result of the reference, the travel permission point relevant to the rail image width G is read to be set to the travel permission point setting unit 301, and the speed of the train 100 is controlled so as to stop before the travel permission point. It should be noted that in the case where the rail image width matching the rail image width G acquired by the rail image width recognition unit 302 is not registered in the database unit 303, the train control device 101 selects data that is registered with a larger rail width. According to such control, the calculation work of the distance to the obstacle can be omitted, and the computation load can be further reduced.

### Third Embodiment

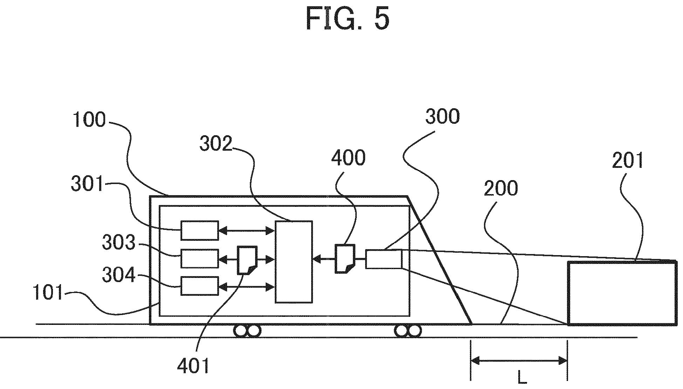

Fig. 5 is a diagram for showing a train 100 in which a train control device 101 is mounted and an obstacle 201 in a third embodiment. Parts same as those in the second embodiment will be followed by the same signs, and the explanation thereof will be omitted. In the third embodiment, the relevant data relating the rail image width G of the obstacle point to the distance L to the obstacle 201 is used in accordance with an own train position as similar to the second embodiment.

In the third embodiment, as shown in Fig. 5, the train control device 101 has an own train position computation unit 304 that computes the position of the own train. The own train position computation unit 304 computes the own train position on the basis of information of a ground element and a speed sensor installed near a track, and transmits the own train position to the rail image width recognition unit 302. The own train position computation unit 304 may manage the own train position in any manner. However, the own train position is managed using the distance from the track end on the start point side in the route where the own train is travelling in the embodiment.

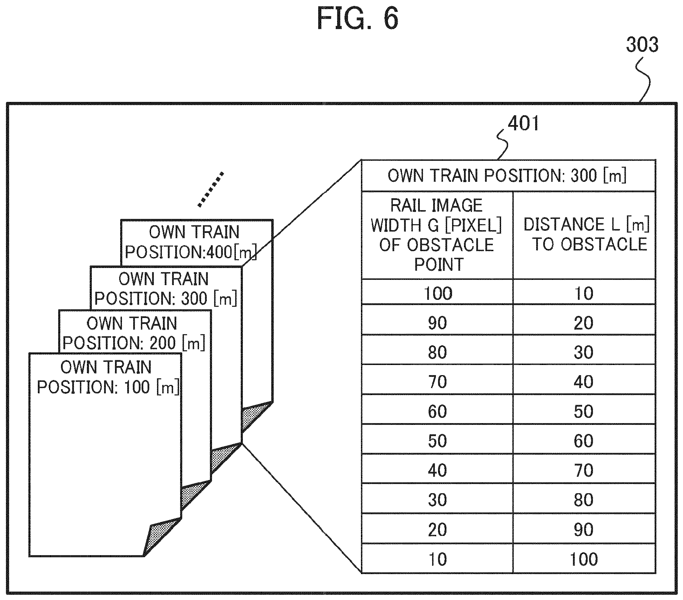

Fig. 6 is a diagram for showing an example of the database unit 303 and the relevant data 401 in the embodiment. The database unit 303 stores the relevant data 401 associated with each own train position. Namely, the relevant data 401 relating the rail image width G of the obstacle point to the distance L to the obstacle 201 is provided for each own train position.

The rail image width recognition unit 302 recognizes the rail image width G, acquires the own train position from the own train position computation unit 304, searches for the relevant data 401 corresponding to the own train position by referring to the database unit 303, and obtains the distance L to the obstacle 201 on the basis of the recognized rail image width G. It should be noted that the database unit 303 can be updated from a ground element installed near a track or ground facilities through wireless communications.

According to the embodiment, even in the case where a curve exists on the route and the rail image width G of the obstacle point and the distance L to the obstacle 201 are changed depending on the own train position, the distance to the obstacle 201 can be correctly calculated on the basis of the rail image width G of the obstacle point.

### Fourth Embodiment

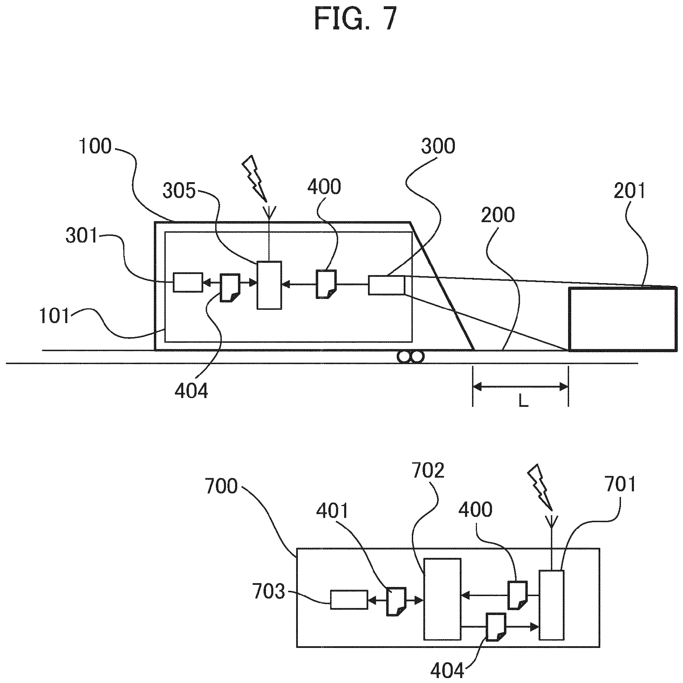

Fig. 7 is a diagram for showing a train 100 in which a train control device 101 is mounted and an obstacle 201 in a fourth embodiment. In the embodiment, a ground device 700 is provided near the rails 200, and data is wirelessly transmitted and received between the train control device 101 and the ground device 700. Parts same as those in the other embodiments will be followed by the same signs, and the explanation thereof will be omitted.

In the fourth embodiment, as shown in Fig. 7, the ground device 700 has a wireless device 701, a rail image width recognition unit 702, and a database unit 703. The rail image width recognition unit 702 recognizes the rails 200 and the obstacle 201 on the basis of the image data 400 of the front, and obtains the rail width. The database unit 703 stores the relevant data 401 relating the rail image width G to the distance L to the obstacle 201.

The train control device 101 of the embodiment transmits the image data 400 acquired from the imaging device 300 to the ground device 700 together with identifier information for identifying the own train through the wireless device 305 mounted in the train 100. The rail image width recognition unit 702 provided in the ground device 700 analyzes the image data 400 received from the wireless device 701, and refers to the database unit 703 for the obtained rail image width G. The ground device 700 obtains the travel permission point on the basis of the reference result of the database unit 703, and then identifies the train control device 101 of the destination on the basis of the identifier information to transmit information 404 of the travel permission point through the wireless device 701.

The wireless device 305 of the train control device 101 receives the information 404 of the travel permission point from the ground device 700 and transmits the distance L to the obstacle 201 to the travel permission point setting unit 301, and the travel permission point setting unit 301 sets the travel permission point before the obstacle 201. Namely, the train control device 101 controls the train 100 to stop before the travel permission point. It should be noted that the train control device 101 may have a timer function, and in the case where a response related to the travel permission point is not made from the ground device 700 within a specified period of time from transmission of the image data to the ground device 700, the travel permission point may be set on the basis of the previously-received information and the brake of the train 100 may be controlled to be applied.

In addition, when transmitting the image data 400 to the ground device 700, the train control device 101 may extract and transmit only information necessary for an image analysis. Accordingly, the amount of communication data through the wireless device can be reduced, and timeliness of computation related to the travel possible point can be improved.

In the fourth embodiment, the train is controlled by providing the rail image width recognition unit 702 and the database unit 703 to the ground device 700. Namely, in other words, the present invention is a system in which the imaging device 300 and the train control device 101 are mounted in the train 100 travelling on the rails 200, the travel permission point on the basis of the image data 400 is acquired by the ground device 700 provided on the ground, and bidirectional communications between the train 100 and the ground device 700 are performed by the wireless devices 305 and 701 so that the train 100 is controlled. It should be noted that bidirectional communications between the wireless device 305 provided in the train 100 and the wireless device 701 provided in the ground device 700 may be performed through a repeater provided at a proper place.

According to the embodiment, it is possible to allow the ground device 700 to have a margin in the calculation capability and the recording capacity of data as compared to the train control device 101 installed in the train 100. Thus, the speed of the computation can be increased, and the computation can be sophisticated. In addition, an image analysis can be sophisticated and other programs can be updated by updating the programs in the ground device 700 without changing the train control device 101 mounted in each train 100. Thus, the system is excellent in maintainability.

According to the above-described embodiments, the following effects can be obtained.
(1) A train control device 101 includes: an imaging device 300 that captures an image from a train 100 travelling on rails 200; and a rail image width recognition unit 302 that recognizes the rails 200 and an obstacle 201 on the rails 200 using image data 400 captured by the imaging device 300 and obtains a distance L to the obstacle 201 on the basis of a rail width G of a point where the obstacle 201 exists. Accordingly, it is possible to reduce a computation load when the distance to the obstacle is calculated.
(2) A train control system includes: a train control device 101 that is mounted in a train 100 travelling on rails 200 and transmits image data 400 captured by an imaging device 300 to control the travel of the train 100; and a ground device 700 that recognizes the rails 200 and an obstacle 201 on the rails 200 on the basis of the transmitted image data 400 to obtain a travel permission point 404 for the train 100 and transmits the travel permission point 404 to the train control device 101, and the train control device 101 controls the travel of the train 100 on the basis of the travel permission point 404 received from the ground device 700. Accordingly, it is possible to reduce a computation load when the distance to the obstacle is calculated.

### (Modified Example)

The present invention can be carried out by modifying the above-described first to fourth embodiments as described below.
(1) Although the distance between the train and the obstacle located ahead was obtained on the basis of the image data of the front obtained by capturing the front direction of the train travelling on the rails, the distance between the train and an obstacle located behind may be obtained on the basis of image data of the rear obtained by capturing the rear direction of the train.
(2) When computing the rail width, the train control device 101 can omit the recognition of the obstacle 201. For example, the rail image width recognition unit 302 sequentially computes a limit point where the rail width can be calculated on the basis of the image data 400 of the front, and monitors the continuity of the rail width. In this computation, in the case where the rail width can be continuously acquired up to a point recognized as that where the rails interest with each other (namely, a point where the rail width is recognized as zero), the train control device 101 may determine as a state of no obstacle 201. In the case where a region where the rail width cannot be acquired occurs midway, the train control device 101 may determine as a state in which the obstacle 201 is present in the region. It should be noted that the range where the rail width can be continuously acquired is not limited to the point (farthest point) recognized as that where the rails interest with each other, but a certain width may be set as a lower-limit value in the computation of the rail width. By employing such computation, even in the case where it is difficult to recognize the obstacle 201 as an obstacle, the travel permission point can be set before the obstacle 201. In addition, the control of monitoring the continuity of the computation of the rail width and the control on the basis of the recognition of the obstacle 201 may exist in combination.

The present invention is not limited to the above-described embodiments, and other possible embodiments within the range of the technical idea of the present invention are also included within the range of the present invention as long as they fall within the scope of the appended claims.

This application claims priority over the following application:
Japanese Patent Application 2018-181012 (filed on September, 26, 2018)

### List of Reference Signs

- 100: train
- 101: train control device
- 200: rail
- 201: obstacle
- 300: imaging device
- 301: travel permission point setting unit
- 302, 702: rail image width recognition unit
- 303, 703: database unit
- 304: own train position computation unit
- 305, 701: wireless device
- 400: image data
- 402: obstacle image
- 403: rail image
- 404: information of travel permission point
- 700: ground device

## Claims

1. A train control device comprising:
an imaging device (300) configured to capture an image from a train (100) travelling on rails (200); and
a recognition unit configured to recognize the rails (200) and an obstacle (201) on the rails (200) using image data (400) captured by the imaging device (300) and to obtain a distance (L) to the obstacle (201) on the basis of a rail width (G) of a point where the obstacle (201) exists,
wherein the recognition unit is configured to recognize a rail width (G) of an intersection position where the rails (200) intersect with the obstacle (201) from the captured image data (400) to obtain the distance (L) to the obstacle (201),
wherein the train control device is **characterized by** further comprising:
an own train position computation unit (304) configured to calculate an own train position travelling on the rails (200), wherein
the recognition unit has a database unit (303,703) in which relevant data (401) relating the rail width (G) to the distance (L) to the intersection position is stored while being associated with the own train position, and is configured to calculate the distance (L) to the intersection position using the data stored in the database unit (302, 702) on the basis of the recognized rail width (G).

2. The train control device according to claim 1,
wherein the recognition unit has an arithmetic expression representing a relation of a distance (L) from the rail width (G) to the intersection position, and is configured to calculate the distance (L) to the intersection position using the arithmetic expression on the basis of the recognized rail width (G).

3. The train control device according to claim 1,
wherein the database unit (303,703) is updated from a ground element installed near a track or ground facilities through wireless communications.

4. The train control device according to any one of claims 1 to 3,
wherein the imaging device (300) is configured to capture the image data (400) of the front or rear in the travelling direction of the train (100).

5. The train control device according to any one of claims 1 to 3,
wherein the train control device comprises a travel permission point setting unit (301) that is configured to set a travel permission point as a point where the train (100) is permitted to travel, and
wherein the travel permission point setting unit (301) is configured to set the travel permission point before the position of the obstacle (201) on the basis of the distance (L) to the obstacle (201) obtained by the recognition unit.

6. A train control system comprising a train (100) and a ground device (700), the train comprising:
a train control device (101) according to claim 1, and
the ground device (700) configured to recognize the rails (200) and an obstacle (201) on the rails (200) on the basis of the transmitted image data (400) to obtain a travel permission point for the train (100), and to transmit the travel permission point to the train control device (101),
wherein the train control device (101) is configured to control the travel of the train (100) on the basis of the travel permission point received from the ground device (700).

## Patentansprüche

1. Zugsteuervorrichtung, die Folgendes umfasst:
eine Bildgebungsvorrichtung (300), die konfiguriert ist, ein Bild von einem Zug (100), der auf Schienen (200) fährt, zu erfassen; und
eine Erkennungseinheit, die konfiguriert ist, unter Verwendung von Bilddaten (400), die durch die Bildgebungsvorrichtung (300) erfasst werden, die Schienen (200) und ein Hindernis (201) auf den Schienen (200) zu erkennen und auf der Grundlage einer Schienenbreite (G) eines Punktes, an dem das Hindernis (201) vorhanden ist, einen Abstand (L) bis zum Hindernis (201) zu erhalten,
wobei die Erkennungseinheit konfiguriert ist, eine Schienenbreite (G) einer Kreuzungsposition, an der die Schienen (200) das Hindernis (201) kreuzen, aus den erfassten Bilddaten (400) zu erkennen, um den Abstand (L) zum Hindernis (201) zu erhalten,
wobei die Zugsteuervorrichtung **dadurch gekennzeichnet ist, dass** sie ferner Folgendes umfasst:
eine Recheneinheit (304) für eine Position des eigenen Zugs, die konfiguriert ist, eine Position des eigenen Zugs, der auf den Schienen (200) fährt, zu berechnen, wobei
die Erkennungseinheit eine Datenbankeinheit (303, 703) aufweist, in der relevante Daten (401), die die Schienenbreite (G) mit dem Abstand (L) bis zur Kreuzungsposition in Beziehung setzen, gespeichert sind, während sie der Position des eigenen Zuges zugeordnet sind, und konfiguriert ist, den Abstand (L) bis zur Kreuzungsposition unter Verwendung der in der Datenbankeinheit (302, 702) gespeicherten Daten auf der Grundlage der erkannten Schienenbreite (G) zu berechnen.

2. Zugsteuervorrichtung nach Anspruch 1,
wobei die Erkennungseinheit einen arithmetischen Ausdruck enthält, der eine Relation eines Abstands (L) zur Schienenbreite (G) bis zur Kreuzungsposition darstellt, und konfiguriert ist, den Abstand (L) bis zur Kreuzungsposition unter Verwendung des arithmetischen Ausdrucks auf der Grundlage der erkannten Schienenbreite (G) zu berechnen.

3. Zugsteuervorrichtung nach Anspruch 1,
wobei die Datenbankeinheit (303, 703) durch Drahtloskommunikation von einem Bodenelement, das in der Nähe eines Gleises oder von Bodenanlagen installiert ist, aktualisiert wird.

4. Zugsteuervorrichtung nach einem der Ansprüche 1 bis 3,
wobei die Bildgebungsvorrichtung (300) konfiguriert ist, die Bilddaten (400) der Vorderseite oder der Rückseite in Fahrtrichtung des Zuges (100) zu erfassen.

5. Zugsteuervorrichtung nach einem der Ansprüche 1 bis 3,
wobei die Zugsteuervorrichtung eine Fahrerlaubnispunkt-Einstelleinheit (301) umfasst, die konfiguriert ist, einen Fahrerlaubnispunkt als einen Punkt, an dem erlaubt wird, dass der Zug (100) fährt, einzustellen, und
wobei die Fahrerlaubnispunkt-Einstelleinheit (301) konfiguriert ist, den Fahrerlaubnispunkt vor der Position des Hindernisses (201) auf der Grundlage des Abstands (L) bis zum Hindernis (201), der durch die Erkennungseinheit erhalten wird, einzustellen.

6. Zugsteuersystem, das einen Zug (100) und eine Bodenvorrichtung (700) umfasst, wobei der Zug Folgendes umfasst:
eine Zugsteuervorrichtung (101) nach Anspruch 1, und
wobei die Bodenvorrichtung (700) konfiguriert ist, die Schienen (200) und ein Hindernis (201) auf den Schienen (200) auf der Grundlage der übertragenen Bilddaten (400) zu erkennen, um einen Fahrerlaubnispunkt für den Zug (100) zu erhalten, und den Fahrerlaubnispunkt an die Zugsteuervorrichtung (101) zu übertragen,
wobei die Zugsteuervorrichtung (101) konfiguriert ist, die Fahrt des Zuges (100) auf der Grundlage des Fahrerlaubnispunktes, der von der Bodenvorrichtung (700) empfangen wird, zu steuern.

## Revendications

1. Dispositif de commande de train comprenant :
un dispositif d'imagerie (300) configuré pour capturer une image depuis un train (100) circulant sur des rails (200) ; et
une unité de reconnaissance configurée pour reconnaître les rails (200) et un obstacle (201) sur les rails (200) à l'aide de données d'image (400) capturées par le dispositif d'imagerie (300) et pour obtenir une distance (L) jusqu'à l'obstacle (201) sur la base d'une largeur entre rails (G) d'un point où l'obstacle (201) existe,
dans lequel l'unité de reconnaissance est configurée pour reconnaître une largeur entre rails (G) d'une position d'intersection où les rails (100) se recoupent avec l'obstacle (201) à partir des données d'image capturées (400) pour obtenir la distance (L) jusqu'à l'obstacle (201),
dans lequel le dispositif de commande de train est **caractérisé en ce qu'**il comprend en outre :
une unité de calcul de position de propre train (304) configurée pour calculer une position d'un propre train circulant sur les rails (200), dans lequel
l'unité de reconnaissance a une unité de base de données (303, 703) dans laquelle des données pertinentes (401) reliant la largeur entre rails (G) à la distance (L) jusqu'à la position d'intersection sont stockées tout en étant associées à la position du propre train, et est configurée pour calculer la distance (L) jusqu'à la position d'intersection à l'aide des données stockées dans l'unité de base de données (302, 702) sur la base de la largeur entre rails reconnue (G).

2. Dispositif de commande de train selon la revendication 1,
dans lequel l'unité de reconnaissance a une expression arithmétique représentant une relation d'une distance (L) depuis la largeur entre rails (G) jusqu'à la position d'intersection, et est configurée pour calculer la distance (L) jusqu'à la position d'intersection à l'aide de l'expression arithmétique sur la base de la largeur entre rails reconnue (G).

3. Dispositif de commande de train selon la revendication 1,
dans lequel l'unité de base de données (303, 703) est mise à jour depuis un élément au sol installé près d'une voie ou d'installations au sol via des communications sans fil.

4. Dispositif de commande de train selon l'une quelconque des revendications 1 à 3,
dans lequel le dispositif d'imagerie (300) est configuré pour capturer les données d'image (400) de l'avant ou de l'arrière dans la direction de circulation du train (100).

5. Dispositif de commande de train selon l'une quelconque des revendications 1 à 3,
dans lequel le dispositif de commande de train comprend une unité de définition de point de permission de circulation (301) qui est configurée pour définir un point de permission de circulation comme étant un point où le train (100) est autorisé à circuler, et
dans lequel l'unité de définition de point de permission de circulation (301) est configurée pour définir le point de permission de circulation avant la position de l'obstacle (201) sur la base de la distance (L) jusqu'à l'obstacle (201) obtenue par l'unité de reconnaissance.

6. Système de commande de train comprenant un train (100) et un dispositif au sol (700), le train comprenant :
un dispositif de commande de train (101) selon la revendication 1, et
le dispositif au sol (700) configuré pour reconnaître les rails (200) et un obstacle (201) sur les rails (200) sur la base des données d'images transmises (400) pour obtenir un point de permission de circulation pour le train (100), et pour transmettre le point de permission de circulation au dispositif de commande de train (101),
dans lequel le dispositif de commande de train (101) est configuré pour commander la circulation du train (100) sur la base du point de permission de circulation reçu depuis le dispositif au sol (700).
